(19) Europäisches Patentamt / European Patent Office / Office européen des brevets

(11) **EP 2 430 421 B1**

(12) **FASCICULE DE BREVET EUROPEEN**

(45) Date de publication et mention
de la délivrance du brevet:
**13.03.2013 Bulletin 2013/11**

(21) Numéro de dépôt: **10724724.9**

(22) Date de dépôt: **12.05.2010**

(51) Int Cl.:
***G01N 11/10*** *(2006.01)*

(86) Numéro de dépôt international:
**PCT/EP2010/056516**

(87) Numéro de publication internationale:
**WO 2010/130766 (18.11.2010 Gazette 2010/46)**

(54) **PROCEDE DE CARACTERISATION RHEOLOGIQUE D'UN MILIEU COMPLEXE**

VERFAHREN ZUR RHEOLOGISCHEN CHARAKTERISIERUNG EINES KOMPLEXEN MEDIUMS

METHOD FOR THE RHEOLOGICAL CHARACTERISATION OF A COMPLEX MEDIUM

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **15.05.2009 FR 0902362**

(43) Date de publication de la demande:
**21.03.2012 Bulletin 2012/12**

(73) Titulaire: **Formulaction**
**31240 L'Union (FR)**

(72) Inventeur: **BRUNEL, Laurent**
**F-26380 Peyrins (FR)**

(74) Mandataire: **Ravina, Bernard**
**RAVINA SA**
**8 Rue des Briquetiers**
**ZA de Font Grasse**
**BP 10077**
**31703 Blagnac (FR)**

(56) Documents cités:
**EP-B1- 1 720 000     WO-A1-2005/031324**
**FR-A1- 2 860 300**

- ZAKHAROV P ET AL: "Multispeckle diffusing-wave spectroscopy with a single-mode detection scheme" PHYSICAL REVIEW E (STATISTICAL, NONLINEAR, AND SOFT MATTER PHYSICS), AMERICAN PHYSICAL SOCIETY, COLLEGE PARK, MD, US LNKD- DOI:10.1103/PHYSREVE. 73.011413, vol. 73, no. 1, 1 janvier 2006 (2006-01-01), pages 11413/1-011413/5, XP002396706 ISSN: 1539-3755

## Description

La présente invention concerne le domaine de la caractérisation physique des milieux complexes, et plus particulièrement la mesure des propriétés rhéologiques des compositions industrielles, notamment des produits opaques.

Elle a pour objet un procédé de détermination quantitative des propriétés viscoélastiques d'un milieu complexe et généralement opaque, fondé sur le calcul du déplacement des particules en suspension à partir de la détection de la lumière diffusée par le milieu. Est également objet de l'invention un appareil destiné à la mise en oeuvre de ce procédé.

Il est très utile pour les industriels de caractériser du point de vue de leurs propriétés rhéologiques les produits qu'ils mettent au point ou dont ils contrôlent la qualité, par exemple pour suivre l'évolution dans le temps de la viscosité d'une formulation, ou pour comparer les propriétés viscoélastiques de deux produits de formulations proches. Pour ce faire on utilise de manière courante des viscosimètres et rhéomètres à mobile tournant et oscillant qui mesurent la résistance au cisaillement et à l'écoulement et permettent de calculer la viscosité correspondante. Le principe repose sur la mesure de la force nécessaire à la mise en rotation ou en oscillation d'une jauge en contact avec le produit, la jauge pouvant être une tige plongée dans le produit, ou bien des plaques, planes ou coniques, entre lesquelles on a étalé un film du produit à tester.

Dans tous les cas, un échantillon est placé au contact de la jauge qui doit être nettoyée entre chaque mesure, ce qui représente une perte de temps importante, et introduit des risques de dérèglement, voire de dégradation du dispositif, et finalement un manque de fiabilité des mesures. L'échantillon testé ne peut être utilisé qu'une fois. Or, lorsqu'on étudie l'évolution d'une composition dans le temps, ou qu'on souhaite comparer plusieurs formules entre elles, il est préférable de conserver le même échantillon pour faire (ou refaire) toutes les mesures nécessaires, afin de réduire au maximum les variations possibles de la composition des produits préparés et celles inhérentes aux manipulations humaines. Au demeurant, ces appareillages ne peuvent être utilisés que par des personnes ayant un niveau d'expertise élevé, sachant les calibrer et les mettre en oeuvre correctement pour obtenir des résultats fiables. Une utilisation en routine en conditions de production est donc pratiquement exclue.

Pour obvier ces problèmes, il a été recherché une méthode reposant sur des mesures optiques. Il est en effet connu de déterminer certaines propriétés dépendant de la rhéologie d'un milieu complexe par la mesure de la cinétique de déplacement de particules de taille connue en suspension dans un milieu. Le mouvement brownien de ces particules correspond à des trajectoires dont les caractéristiques sont fortement liées aux propriétés rhéologiques, et s'analyse en une composante élastique (partie conservatrice) et une composante visqueuse (partie dissipative).

L'art antérieur enseigne la possibilité de suivre la trajectoire des particules browniennes en détectant l'évolution temporelle du champ de speckle produit par une onde laser qui diffuse dans le milieu étudié, grâce à une technique optique connue depuis une trentaine d'années sous le nom de DWS (Diffusing Wave Spectroscopy). Les grains de speckle sont les interférences lumineuses produites pas la superposition des rayons lumineux ayant parcouru divers chemins dans le milieu. La méthode repose sur la détection de la variation d'intensité de la lumière reçue par un détecteur unique ou par les pixels d'une caméra vidéo (en diffusion ou en rétrodiffusion selon la technique choisie). La dynamique du champ de speckle permet de remonter à celle des particules qui ont contribué à la diffusion de la lumière.

Si le nombre de mesures temporelles de l'intensité lumineuse est suffisant, on peut extraire une fonction d'autocorrélation temporelle ($g_2$). L'utilisation d'une caméra vidéo comme détecteur offre la possibilité d'acquérir beaucoup plus de signaux pendant une même période de temps et donc permet d'obtenir une autocorrélation de bonne qualité en beaucoup moins de temps en exploitant la propriété d'ergodicité qui établit qu'il est équivalent de faire la moyenne des signaux en diverses positions de l'espace et de faire une moyenne sur des signaux acquis en des séries successives dans le temps. L'art antérieur a aussi décrit une solution alternative qui repose sur l'utilisation comme détecteur d'une double cellule (EP1720000).

Dans le cas de l'utilisation d'une caméra, la demanderesse a avantageusement introduit une méthode plus pratique de calcul de la décorrélation du speckle, par quantification de la distance inter-images, notée $d_2$ (comme détaillé dans WO 2005/031324). La distance inter-images représente le déplacement des particules dans le laps de temps séparant deux images. Cette méthode permet d'accéder à la dynamique de déplacement des particules, valeur qui renseigne notamment sur la vitesse de séchage (ou la perte de fluidité) d'un mélange.

Elle ne permet cependant pas d'atteindre les différentes composantes rendant compte des propriétés rhéologiques, à savoir le module élastique G'(ω) et le module visqueux G"(ω) du milieu, cette distinction étant souvent précieuse, voire indispensable pour caractériser et prédire le comportement d'un mélange.

Des études antérieures dans ce domaine ont décrit le principe de la détermination des modules visqueux et élastiques en deux étapes. La première étape permet de passer du signal optique au déplacement des particules au cours du temps (cinétique de déplacement des particules, formalisée par le Déplacement Quadratique Moyen (DQM ou MSD pour Mean Square Displacement en anglais), via une modélisation mathématique adéquate et un certain nombre d'approximations (Weitz - 1993). La deuxième étape (Mason - 1995) se fonde sur la loi de Stockes Einstein généralisée pour déduire de cette cinétique les propriétés visqueuses et élastiques de l'échantillon, c'est-à-dire la valeur de G'(ω) et de G"(ω).

Or, les fluides ici visés sont des fluides complexes, ainsi qualifiés en raison des nombreux paramètres qui interviennent pour rendre compte de leurs propriétés, contrairement aux fluides simples, dont le comportement peut être aisément modélisé. En particulier, les modèles établis pour relier les mesures optiques aux propriétés physiques des milieux étudiés font intervenir la distribution statistique P(s) des longueurs des trajets des photons entre la source lumineuse et le récepteur (entre le laser et la caméra). Or le calcul direct de la fonction P(s) n'est possible en pratique que pour des cas simples, utilisant les flacons semi-fini ou des lames. Des simulations numériques pourraient être appliquées pour calculer la fonction P(s) des fluides complexes, mais ce type de solution n'est pas envisageable non plus dans un contexte industriel, car il est impossible de maîtriser tous les paramètres optiques et les lois qui les décrivent. Les temps de calcul sont rédhibitoires pour offrir un résultat de mesure rapide à l'utilisateur et leur précision finale est loin d'être assurée. Ces simulations ont montré en particulier que la plus grande source d'imprécision était la méconnaissance des paramètres qui influent sur la première des deux étapes, c'est-à-dire sur la relation existant entre la distance inter-images $d_2$ et le déplacement réel des particules DQM.

Le problème ainsi posé, le but de la présente invention se résume alors à proposer une manière simple et directe d'obtenir DQM à partir de $d_2$ pour des fluides complexes et opaques, par des moyens pouvant être mis en oeuvre dans des conditions industrielles, avec un résultat fiable et précis. Pour ce faire, les inventeurs ont défini un protocole opératoire, par lequel un échantillon d'un milieu complexe est soumis à une mesure optique fournissant une analyse du mouvement des particules par une méthode connue, cette mesure étant réalisée dans des conditions strictement définies et son résultat étant analysé à l'aide d'un modèle prédéfini et modulable par calibration en fonction d'un paramètre variable du milieu.

Une mesure optique du mouvement peut être par exemple réalisée en projetant un faisceau laser sur un échantillon et en enregistrant le champ électromagnétique produit par la lumière diffusée par ledit échantillon sous la forme d'images matricielles. Une analyse directe de la dynamique de speckle produite par la diffusion du faisceau laser traversant le milieu analysé peut être obtenue par exemple selon le procédé décrit dans WO 2005/031324. On a ainsi accès aux valeurs de la distance inter-images $d_2$, dont on peut déduire on peut déduire la courbe d'évolution $d_2/d_{2max}$ en fonction du temps, $d_{2max}$ étant la valeur asymptotique que prend $d_2$ après un certain temps. A noter qu'à ce stade, on peut par exemple étudier la vitesse de séchage d'un film liquide, mais pas obtenir des informations rhéologiques sur le produit durant son séchage. La présente invention a pour but d'apporter ce type d'informations, répondant ainsi à un besoin des laboratoires désirant suivre la rhéologie durant la formation d'un film. A noter également que conformément au cahier des charges de l'invention, les analyses sont faites sur des échantillons tridimensionnels et non sur des films étalés manuellement. Un tel instrument est ainsi capable de faire cette mesure *in situ.*

Il est apparu que, pour être exploitable dans un modèle performant, la mesure de $d_2$ doit être réalisée dans des conditions strictement définies. Il a été établi par la demanderesse que les paramètres essentiels et suffisants à prendre en compte lors de la mesure étaient la dimension de l'échantillon (et donc forme du récipient), la stricte immobilité de l'appareil et la stabilité de la température de l'échantillon, mais aussi de celle du dispositif de mesure. En effet, les paramètres viscoélastiques des produits évoluent en fonction de la température. Du fait de l'extrême sensibilité de la mesure, pour la mise en oeuvre de l'invention, il s'est avéré indispensable de garantir une régulation thermique du dispositif de mesure et aussi d'éviter que des mouvements d'air chaud ne se développent par convection entre l'échantillon et la caméra. De plus, toutes les vibrations dans l'environnement peuvent être transmises à l'échantillon analysé et générer un signal parasite plus fort que le signal utile.

Comme expliqué plus haut, le résultat de la mesure optique et de son analyse en termes de vitesse de déplacement $d_2(t)$, doit être relié au déplacement quadratique moyen DQM. Selon l'invention cette opération est réalisée à l'aide d'un modèle prédéfini et modulable en fonction d'un paramètre variable du milieu.

L'expression du modèle ici proposé permet de l'adapter à une variable du milieu. Les propriétés optiques, notamment l'opacité du produit, sont bien sûr variables d'un produit à l'autre. Il a pu être montré que la longueur de transport I* est le principal paramètre rendant compte des propriétés optiques du produit qui influe sur les longueurs des trajectoires des photons. Il a été montré en outre, que les paramètres physiques qui peuvent influer (diamètre des particules, indice de réfraction des matériaux qui constituent les différentes phases du produit, formes des particules) ont une importance moindre dans l'obtention du résultat, leur impact étant en grande partie déjà pris en compte dans le paramètre I*. C'est pourquoi, selon le modèle ici proposé, I* est l'unique paramètre variable influant sur la courbe DQM($d_2/d_{2max}$), ce qui est particulièrement avantageux dans la mesure où I* est directement mesurable par des techniques optiques connues de l'homme de l'art.

L'invention a ainsi pour objet un procédé de détermination des propriétés viscoélastiques d'un milieu complexe à partir du mouvement des particules en suspension, dans lequel un échantillon du milieu est placé dans un dispositif de mesure de la lumière diffusée par les particules en suspension, apte à projeter une lumière cohérente sur ledit échantillon, et à détecter et analyser la lumière diffusée pour calculer la distance inter-images $d_2$, ledit procédé comprenant les étapes consistant essentiellement à :

- a) caractériser l'opacité du milieu par la mesure de longueur de transport I* dudit milieu,

- b) introduire dans un flacon de dimensions données un échantillon dudit milieu,
- c) placer le flacon dans une chambre de mesure thermostatée dudit dispositif de mesure du mouvement des particules,
- d) projeter un faisceau de lumière cohérente sur l'échantillon et détecter la lumière diffusée par les particules sous forme d'une série d'images séquencées,
- e) analyser le mouvement des particules en fonction du temps en calculant la distance inter-images $d_2$ et le rapport $d_2/d_{2maX}$,
- f) établir une expression analytique E mettant en relation directe, pour la valeur de I* déterminée à l'étape a), le rapport $d_2/d_{2max}$ et le déplacement quadratique moyenne DQM, en vue de calculer les modules visqueux et élastique du milieu.

Il est connu de déterminer la longueur de transport I* d'un milieu concentré et/ou opaque à différents intervalles de temps. Cette valeur est représentative de la pénétration de la lumière dans le milieu et permet de quantifier son opacité. La détermination de I* peut être effectuée par exemple selon la méthode objet du brevet FR 2 841 983.

Un dispositif de mesure de la lumière diffusée par les particules en suspension, peut être similaire à celui décrit dans WO2005/031324, au moins en ce qui concerne le module optique et les moyens d'analyse et de calcul du signal, c'est-à-dire les organes aptes à projeter une lumière cohérente sur ledit échantillon et à détecter et analyser la lumière diffusée pour calculer la distance inter-images $d_2$ et le rapport $d_2/d_{2max}$. Cette technique repose sur la détection de la lumière en rétrodiffusion, avec analyse de la décorrélation du champ de speckle via la distance inter-images $d_2$.

L'expression du modèle ici proposé contient avantageusement au moins un coefficient ajustable et de préférence trois coefficients, qui permettent d'adapter le modèle en fonction d'un paramètre variable du milieu, en l'occurrence à I*. C'est également la raison pour laquelle, de manière avantageuse, les coefficients ajustables choisis sont représentatifs des différentes valeurs que peut prendre I* dans les différents milieux à analyser. Ainsi, selon une caractéristique intéressante de l'invention, à l'étape f), l'expression E est exprimée à l'aide d'au moins un, et de préférence de trois coefficients variables susceptibles d'être exprimés en fonction de l'opacité du milieu, et ladite expression E est ajustée en fonction de la valeur de I* déterminée à l'étape a), avant le calcul des modules visqueux et élastique du milieu.

Une originalité de l'invention est que ces coefficients sont déterminés pour chaque milieu par une méthode de calibration particulièrement performante. Ainsi, selon une caractéristique préférée de l'invention, à l'étape f), les coefficients variables utilisés pour établir l'expression E sont des fonctions de I*, choisies et enregistrées dans une base de données préalablement constituée selon les étapes consistant à :

i) préparer dans des flacons de dimensions données, une gamme d'échantillons d'un fluide simple de viscosité connue avec des opacités différentes,
ii) pour chaque échantillon de la gamme,

- déterminer la valeur de I*,
- calculer la courbe théorique $DQM_T(t)$ en fonction du temps à l'aide de la loi de Stockes Einstein,
- analyser le mouvement des particules en fonction du temps pour calculer la distance inter-images $d_2$ et le rapport $d_2/d_{2max}$, et construire la courbe expérimentale $DQM_E(t)$ grâce à l'expression E,
- rechercher les valeurs desdits coefficients, pour obtenir une courbe théorique $DQM_T(t)$ coïncidant avec ladite la courbe expérimentale $DQM_E(t)$,

iii) pour chaque coefficient, tracer la courbe de calibration représentant l'évolution de sa valeur en fonction de I*, et
iv) enregistrer chacune desdites courbes dans une base de données apte à être sollicitée à l'étape f).

Cette méthode consiste donc à exprimer les coefficients en fonction de l'opacité exprimée par la valeur de I* mesurée pour des fluides de viscosité constante à température donnée (fluides simples). Lorsqu'on analyse un échantillon complexe, on mesure préalablement son opacité, et on introduit dans le modèle les valeurs des coefficients de calibration obtenues pour la valeur de I* du fluide simple de même opacité. On peut ainsi réaliser de manière particulièrement avantageuse, une calibration indépendante de la température et des autres conditions de mesure.

Ainsi, une caractéristique essentielle du modèle proposé est le fait qu'une fois établie la relation entre $d_2/d_{2max}$ et DQM pour le cas particulier de fluides simples on pourra utiliser cette relation pour tous les fluides complexes. De manière corollaire, la méthode proposée permet de construire la courbe $DQM(d_2/d_{2max})$ à partir de la seule connaissance de I*. Un des avantages essentiels en découlant est que la géométrie de l'échantillon n'est pas imposée et qu'il est possible d'utiliser des flacons réalistes (tridimensionnels) adaptés aux tests d'une grande variété de produits en conditions industrielles, sans manipulation ni destructions de l'échantillon.

En outre, pour améliorer la qualité et l'efficacité de la modélisation proposée par la demanderesse, celle-ci peut de préférence répondre aux exigences suivantes :

- elle repose sur des expressions analytiques choisies après observation des mesures expérimentales pour s'adapter au mieux à celles-ci ;
- les expressions analytiques sont simples pour des raisons de performance de calcul (le logiciel final de l'instrument aura à calculer des milliers de DQM en quelques secondes) ;
- elle contient un minimum de paramètres libres dans un but de simplicité et de robustesse.
- ces paramètres doivent autant que possible avoir une signification physique pour aider à l'interprétation d'éventuels défauts de la mesure.

Ainsi, selon un mode de mise en oeuvre particulier du procédé selon l'invention, à l'étape f), l'expression analytique adopte la forme suivante :

$$( d_2/d_{2max})^2 = 1 - \exp\left\{ -4 (A\ DQM\ k_0^2/6)^{[B + C\ \log_{10}(A\ DQM\ k_o^2/6)]} \right\}$$

dans laquelle A, B, et C sont trois coefficients variables, et $k_o$ est le nombre d'onde, dépendant de la longueur d'onde de la lumière projetée.

Selon un mode de mise en oeuvre particulièrement intéressant du procédé selon l'invention, lesdits coefficients variables A, B et C sont choisis de sorte que les fonctions de calibration A(I*), B(I*) et C(I*) sont aptes à être représentées par des droites, ce qui peut être fait en choisissant judicieusement une échelle logarithmique ou linéaire pour les axes des abscisses ou des ordonnées.

Selon une caractéristique préférée de l'invention, à l'étape d), la détection de ladite série d'images est réalisée selon une cadence croissante, en une ou en plusieurs salves. En effet, afin d'explorer une grande gamme d'échelle de temps (de $10^{-4}$s à $10^{+5}$s) tout en évitant d'avoir à acquérir et à gérer une masse d'information trop importante, il est préférable de répartir les prises de vues sur une échelle de temps logarithmique. L'acquisition des images ne se fait donc pas avec un cadencement constant entre chaque image, comme c'est le cas pour un film vidéo classique. On peut utiliser une horloge électronique qui commande l'acquisition des images en un film unique dans lequel les vues sont prises à des intervalles de plus en plus longs. Alternativement, on peut réaliser plusieurs petits films vidéo, chaque salve comprenant jusqu'à 1000 images par exemple, prises à une cadence image constante, mais selon une cadence différente pour chaque salve.

Dans un mode de réalisation préféré, lors de l'étape d), la détection de ladite série d'images est réalisée en une seule salve à une cadence croissante selon une progression géométrique sur au moins deux décades, quatre à cinq décades étant encore préférées. Ceci revêt un intérêt notable pour couvrir toute l'étendue des valeurs de $d_2$ nécessaires à la détermination des deux termes G'(ω) et G"(ω).

Dans certaines applications, il est intéressant de déterminer les propriétés rhéologiques d'un échantillon soumis à des températures éloignées de l'ambiante. Cependant, les éléments formant le module optique, à savoir essentiellement la source de lumière cohérente et le détecteur de la lumière diffusée, sont sensibles aux variations de températures et il est préférable qu'ils fonctionnent dans un intervalle généralement compris entre 5°C et 50°C. C'est pourquoi, il est proposé ici un mode de mise en oeuvre du procédé inventif, selon lequel les fonctions optiques sont effectuées depuis l'extérieur de la chambre de mesure : pour ce faire, les éléments formant le module optique, à savoir essentiellement la source de lumière cohérente et le détecteur de la lumière diffusée, sont montés hors de la chambre de mesure et pointent vers l'échantillon à travers une de ses parois dans laquelle des percements ont été prévus. La température de la chambre de mesure peut alors être choisie à des niveaux inférieurs à 5°C et supérieurs à 50°C. Ainsi, à l'étape d), la lumière peut être projetée et détectée à l'aide d'un module optique placé à l'extérieur de la chambre de mesure, celle-ci possédant une paroi percée de fenêtres.

Selon un mode préféré de mise en oeuvre du procédé selon l'invention, à l'étape c), une pluralité de flacons d'échantillons sont placés dans plusieurs logements contigus ménagés dans la chambre de mesure. Cette modalité permet d'obtenir une stabilisation des conditions de mesure (température en particulier) pour plusieurs flacons à la fois, ce qui bien entendu optimise le fonctionnement de l'appareil. Si le module optique est monté à l'extérieur de la chambre de mesure, la paroi de cette dernière est pourvue d'autant de fenêtres que de logements pour autoriser le passage de la lumière projetée et diffusée.

Dans ce mode de réalisation du procédé objet de l'invention, de manière avantageuse, le module optique se place successivement face à chacun desdits flacons et les étapes d) à f) sont répétées pour calculer les modules visqueux et élastique de chacun des milieux échantillonnés. La chambre de mesure reste ainsi immobile, ce qui évite de provoquer des mouvements d'air dans la chambre et des chocs qui nuiraient à la précision de la mesure.

Par ailleurs, pour les raisons précisées plus haut, les conditions de réalisation des mesures sont strictement contrôlées. Ainsi, selon une caractéristique de l'invention, l'étape d) est réalisée dans des conditions de stabilité et d'uniformité thermique des échantillons et de la chambre de mesure, en l'absence de mouvements de convection de l'air entre le module optique et l'échantillon, et de vibrations issues du milieu environnant. En particulier, il est opportun de stabiliser la température de l'atmosphère de la chambre de mesure, car des températures non homogènes entraînent des mouvements par convection, qui retentissent sur la qualité de la mesure optique. Les modes de mise en oeuvre ci-dessus décrits concourent à la réalisation de ces conditions. D'autres moyens y contribuent également et sont incorporés à l'appareil de détermination qui sera décrit en détail plus loin.

Ainsi, en procédant à certaines simplifications judicieusement choisies dans le nombre de paramètres variables à prendre en compte, et en définissant une méthode de calcul des résultats basée sur une grande précision des mesures optiques réalisées dans des conditions contrôlées, associée à un mode de calibration permettant le calcul rapide pour tout type de milieu, la présente invention offre un accès simple et rapide à la quantification des propriétés viscoélastiques des milieux complexes, y compris des milieux complexes opaques, sans manipulation ni destruction de l'échantillon. Le procédé peut alors être appliqué au suivi de l'évolution d'un même échantillon au cours du temps ou à la comparaison quantitative de deux produits de formulation proche.

Est également objet de la présente invention un appareil répondant aux exigences susmentionnées et permettant la mise en oeuvre du procédé ci-dessus décrit. Plus précisément, est revendiqué un appareil de détermination des propriétés viscoélastiques d'un milieu complexe à partir du mouvement des particules en suspension, comprenant des moyens de projeter une lumière cohérente sur ledit milieu et des moyens de détecter et d'analyser la lumière diffusée pour calculer la distance inter-images $d_2$, ledit appareil comprenant :

- un module optique comprenant d'une part une source de lumière cohérente apte à projeter un faisceau vers un échantillon du milieu à analyser, et d'autre part des moyens de détection de la lumière diffusée par ledit milieu, sous forme d'images matricielles successives, lesdits moyens étant associés à une unité d'analyse des images apte à fournir les valeurs de la distance inter-images de l'échantillon,
- une chambre de mesure thermostatée dotée d'au moins un logement apte à recevoir un flacon de dimensions données contenant un échantillon dudit milieu, à une distance adéquate du module optique,
- des moyens d'enregistrement et de traitement des données, comprenant des moyens d'acquisition des valeurs de I* caractérisant l'opacité des milieux à analyser, des moyens d'analyse et de calcul aptes à mettre en relation directe, pour une valeur de I*, le rapport $d_2/d_{2max}$ et le déplacement quadratique moyenne DQM, en vue de calculer les modules visqueux et élastique du milieu.

La chambre de mesure est ainsi une enceinte définissant un volume clos. Le logement supportant l'échantillon est conçu pour que le flacon utilisé soit bloqué dans une position déterminée adéquate relativement aux dispositifs optiques. Il est ainsi possible à la fois, d'immobiliser l'atmosphère traversée par les rayons lumineux et de maintenir l'échantillon à une température fixée. Ces dispositions contribuent de manière critique au bon fonctionnement de l'appareil et à l'obtention de résultats quantitatifs directement exploitables.

Selon un mode de réalisation particulier de l'appareil objet de la présente invention, ledit au moins un logement recevant un flacon est ménagé dans un bloc chauffant thermostaté, lui-même placé à l'intérieur de la chambre de mesure, à distance adéquate du module optique.

Dans une variante intéressante de l'appareil objet de l'invention, le module optique est placé à l'extérieur à la chambre de mesure, celle-ci possédant une paroi isolante percée de fenêtres pour le passage de la lumière projetée et diffusée. On peut ainsi étudier des milieux à des températures extrêmes (c'est-à-dire inférieures 5°C et supérieures à 50°C) en fonction des souhaits de l'utilisateur, sans que les éléments du module optique pâtissent d'une température trop élevée ou trop basse.

Selon une autre caractéristique de l'appareil objet de l'invention, la source de lumière cohérente projetée sur l'échantillon est une source laser, et les moyens de détection de la lumière diffusée comprennent un capteur matriciel de type caméra vidéo.

En outre, l'appareil selon l'invention comprend de préférence également des moyens de neutralisation des vibrations du milieu environnant, comprenant des pieds en matériau amortissant et une structure support anti-vibratoire, choisie parmi : table en nid d'abeille, table à coussin d'air, paillasse alourdie. Les pieds sont choisis pour leurs caractéristiques au regard des fréquences de résonance mécanique du dispositif.

D'autres avantages et caractéristiques de l'invention apparaîtront à la lecture de la description ci-après d'une forme de réalisation donnée à titre d'exemple non limitatif, illustrée par les dessins joints dans lesquels :

- la figure 1 est une vue en perspective éclatée d'un appareil selon l'invention,
- la figure 2 est une vue en coupe du même appareil,
- la figure 3 représente l'ajustement des coefficients variables,
- les figures 4a, 4b et 4c sont les graphes résultants d'une détermination.

**EXEMPLE 1** : Appareil de détermination des propriétés viscoélastiques

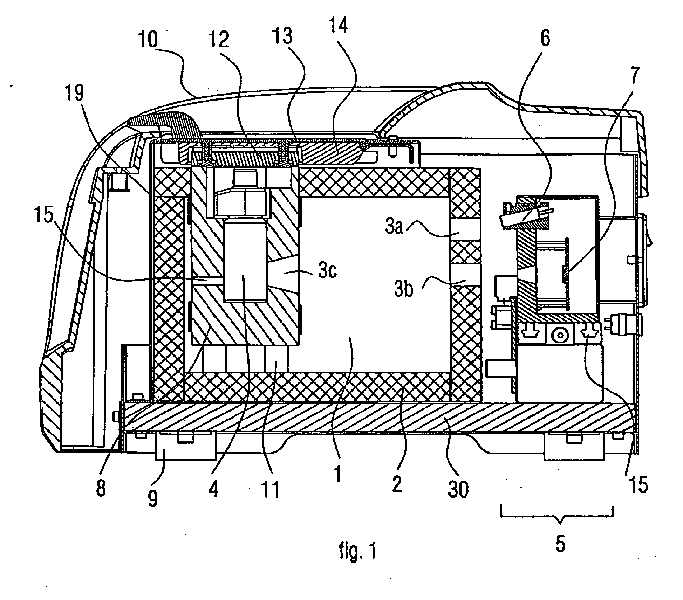

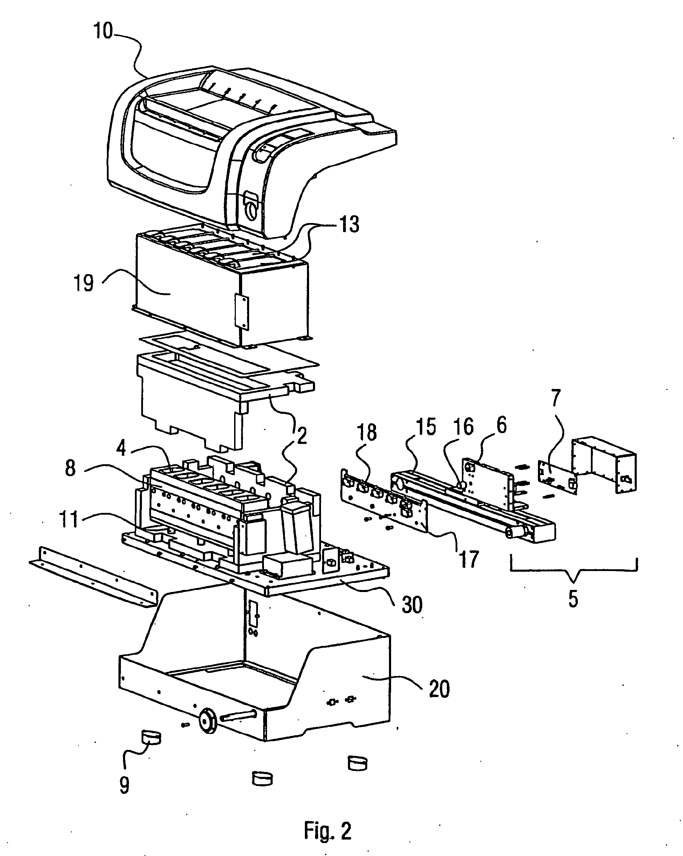

L'appareil de détermination des propriétés viscoélastiques d'un milieu complexe illustré aux figures 1 et 2 comprend la chambre de mesure 1 et le module optique 5, protégés par le capot supérieur 10 et le capot latéral 20, reposant sur le plateau 30 muni des pieds amortissants 9. La chambre de mesure 1 est délimitée par la paroi isolante 2, percée des fenêtres 3a et 3b. Le module optique 5, disposé à l'extérieur de la chambre 1, comprend la source laser 6 placée à l'aplomb de la fenêtre 3a et une caméra vidéo 7 placée à l'aplomb de la fenêtre 3b. Il comprend une carte mère apte à l'analyse du mouvement des particules en fonction du temps, et il est connecté à des moyens de traitement des données et de calcul permettant de mettre en relation directe le rapport $d_2/d_{2max}$ et le déplacement quadratique moyen DQM, en vue de calculer les modules visqueux et élastique du milieu.

Le logement 4 pouvant recevoir un flacon est entouré du bloc chauffant 8, reposant sur la paroi inférieure de la chambre de mesure 1 par l'intermédiaire des pieds 11. Le bloc chauffant 8 est percé en 3c pour le passage de la lumière incidente et rétrodiffusée. Il est fermé par le bouchon chauffant 12, accessible par la trappe 13, elle-même munie de l'isolant 14. Le bloc chauffant 8 est associé à des moyens de contrôle et de régulation de la température (non représentés). Le flacon cylindrique d'un diamètre extérieur de 27,5 mm, est maintenu en place par le poussoir 15.

Comme représenté sur la figure 2, le bloc chauffant 8 comprend six logements 4 accessibles par six trappes 13 montées sur le support 19. Le module optique 5 est monté coulissant sur le rail 15 doté de la butée 16. La came de position 17 munie des capteurs mécaniques 18 coopère avec le rail 15 pour placer le module optique 5 au niveau des fenêtres 3a, 3b.

**EXEMPLE 2** : Principe de la détermination des propriétés viscoélastiques

La caméra recueille la figure d'interférence créée par le laser ayant diffusé dans le produit pour acquérir une série d'images. La première est prise comme référence. Ensuite, pour chaque image suivante on calcule la distance inter-images notée $d_2$ entre celle-ci et l'image de référence. A $t_o$, $d_2$ est nul, puis au cours du temps, sa valeur converge asymptotiquement vers une valeur maximale notée $d_{2max}$.

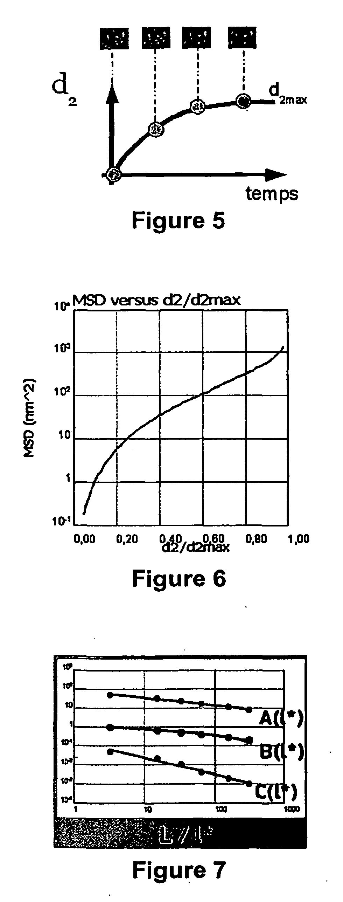

Le graphique présenté à la figure 5 illustre cette évolution.

Il convient maintenant de déterminer le déplacement quadratique moyen DQM, en construisant la courbe $DQM(d_2/d_{2max})$ à partir de la seule connaissance de I*. Pour des raisons d'efficacité de la conversion de $d_2$ en DQM, un modèle empirique a été créé pour donner une expression analytique de la courbe $DQM(d_2/d_{2max})$.

Le DQM est homogène au carré d'une longueur.

Cette relation $DOM(d_2/d_{2max})$ présente l'allure telle que portée à la figure 6, où l'axe y est à l'échelle logarithmique :

La démarche adoptée est la suivante :

Nous avons mesuré la courbe $d_2(t)$ de particules de diamètre connu en suspension dans un fluide simple connu donc caractérisé par sa viscosité.

On peut facilement calculer DQM(t) avec la relation de Stockes Einstein.

$$(Eq\ 7) \qquad DQM = 6\ D\ t$$

avec D : coefficient de diffusion des particules

En éliminant la variable temps, on peut relier $d_2$ et DQM pour un I* donné. La valeur de I* est fixée par la concentration en particules du produit modèle. Si cette concentration est faible (<1%), elle n'a presque pas d'influence sur la viscosité du mélange : la viscosité du mélange reste celle du fluide simple.

Par exemple, pour des particules de dioxyde de Titane ($TiO_2$) de diamètre $1\,\mu m$ en suspension dans un mélange glycérol/eau, la viscosité est constante et peut être mesurée avec précision. Des concentrations en volume de particules de 1%, 0,5%, 0,2%, 0,1%, 0,05% et 0,01% donnent des niveaux d'opacité différents, avec respectivement des valeurs de I* de 80, 160, 390, 750, 1600 et 7600 $\mu m$ pour la longueur d'onde utilisée.

Pour des raisons d'efficacité de la conversion de $d_2$ en DQM expliquées précédemment, un modèle empirique est proposé qui donne une expression analytique de la courbe $DQM(d_2/d_{2max})$ bâti à partir de la fonction de corrélation $g_1$.

Les fonctions de corrélation traditionnellement utilisées sont $g_1(T)$ et $g_2(T)$ avec :

$g_1(T)$ est la fonction de corrélation du champ électrique

$g_2(T)$ est la fonction de corrélation de l'intensité du champ électrique effectivement mesurée par le capteur.

$$\text{(Eq 3)} \qquad g_1(T) = <E(t)E(t+ T)> \, / \, <E^2>$$

$$\text{(Eq 4)} \qquad g_2(T) = <I(t)I(t+ T)> \, / \, <I^2>$$

$g_1$ et $g_2$ sont reliées par la formule (relation de Siegert)

$$\text{(Eq 5)} \qquad g_2(T) - 1 = \beta \, |g_1|^2$$

dans laquelle $\beta$ est un nombre de 0 à 1 qui rend compte de la taille du capteur. Pour des pixels de caméra petit devant la taille du grain de speckle, $\beta = 1$.

Il existe une relation simple entre $d_2$ et $g_2$ :

$$\text{(Eq 6)} \qquad g_2 - 1 = 1 - ( \, d_2/d_{2max} \, )^2$$

Les expressions analytiques fournies par la littérature donnent $g_1(T/TCD)$ pour le cas de particules browniennes dans un fluide simple comme c'est le cas pour les suspensions de calibration choisies. Le temps y est normalisé par le temps caractéristique de diffusion TCD qui dépend du seul coefficient de diffusion D utilisé dans la relation de Stockes Einstein (Eq 7). Ceci permet d'avoir une fonction commune pour tous les mouvements de particules dans tous les fluides simples.

On peut alors relier $d_2/d_{2max}$ à $g_1$ avec les équations 5 et 6 (pour nous, $\beta=1$) :

$$\text{(Eq 9)} \qquad ( \, d_2/d_{2max})^2 = 1 - g_1^2$$

Ainsi, pour le fluide simple, on connaît d'une part DQM pour T/TCD donné (loi de Stockes Einstein), on connaît donc $d_2/d_{2max}$ pour ce T/TCD, et on peut finalement relier DQM à $d_2/d_{2max}$

On peut réécrire la relation de Stockes Einstein (Eq 7) en fonction de T/TCD :

$$\text{(Eq 8)} \qquad DQM = 6DT = 6/k_0 \ T/TCD$$

avec $TCD = 1/(k_0 \, D)$ : temps caractéristique de diffusion.
$k_0$ : nombre d'onde = constante puisque la longueur d'onde du laser est fixée.
D coefficient de diffusion de la particule.

Voici un exemple de formule proposée avec trois paramètres (A,B,C) :

$$g_1(T/TCD) = \exp \{-2 \, (A \ T/TCD)^{[\,B+C \, \log_{10}(A \ T/TCD)\,]} \}$$

Finalement, on peut formuler directement la relation entre DQM et $d_2/d_{2max}$

$$( \, d_2/d_{2max})^2 = 1 - \exp\{ -4 \, (A \ DQM \ k_0^2/6 \,)^{[B+C \, \log_{10}(A \ DQM \ k_0^2/6 \,)]}\}$$

Cette relation établie entre $d_2/d_{2max}$ et DQM pour le cas particulier de fluides simples peut maintenant être utilisée pour tous les fluides complexes, à condition de définir les valeurs de A, B et C applicables.

**EXEMPLE 3** : Calibration

Il reste donc à tracer expérimentalement les courbes A(I*) B(I*) C(I*) pour quelques I*. Pour chaque I*, on ajuste A, B, et C par des moyens numériques ou en observant le graphique donnant DQM(t) avec ses deux axes en échelle logarithmique. La hauteur de la droite est donnée par la viscosité du fluide modèle, la taille des particules modèles, et la température (loi de Stockes Einstein).

On peut faire la même chose pour tous les I* de la gamme de I* correspondant aux domaines d'application de l'instrument. Nous avons constaté expérimentalement que les courbes A(I*) B(I*) C(I*) sont assez régulières et il est donc suffisant de mesurer A, B et C pour 4 ou 5 valeurs de I* et d'interpoler ensuite pour obtenir nos 3 courbes.

A permet de s'ajuster à la viscosité du fluide.
B permet de respecter la loi de diffusion donnée par Stockes Einstein (pente=1 de DQM(t) en log/log)
C permet de conserver cette pente 1 à toutes les échelles de temps (linéarisation)

Un résultat de calibration est donné en exemple par les expressions simples de A, B et C

Taille cellule= L=25 mm

$$A(I^*) = 10 \char`\^ ( -0.4 \times \log_{10}(L/I^*) + 1{,}95 )$$

$$B(I^*) = -0{,}41 \times \log_{10}(L/I^*) + 1{,}18$$

$$C(I^*) = 10 \char`\^ (-0{,}79 \times \log_{10}(L/I^*) - 0{,}46) - 0{,}119$$

Les courbes correspondantes sont représentées à la figure 7.

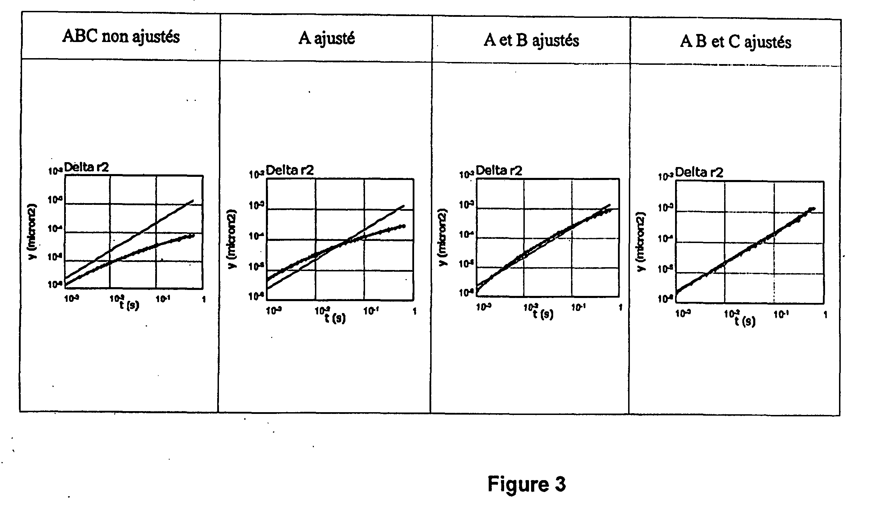

Voici un exemple de cette calibration pour le cas de particules de $TiO_2$ en suspension dans du glycérol (1% en volume). La figure 3 montre comment les paramètres A, B, C permettent d'ajuster parfaitement la courbe expérimentalement à la courbe théorique.

**EXEMPLE 4** : Détermination des propriétés viscoélastiques d'un produit

Deux crèmes dessert de marques et de formulations différentes (F1 et F2) mais revendiquant les mêmes propriétés rhéologiques ont été étudiées. Les crèmes ont été échantillonnées dans deux flacons de 20 ml. On introduit les deux flacons dans deux des logements du bloc chauffant de l'appareil. La température dans les flacons est stabilisée à 25°C après 10 mn. La source laser à 650 nm est projetée sur les échantillons. La cadence d'enregistrement des images de speckle suit une progression géométrique avec un rapport de 1,25 entre un intervalle inter-images donné et le précédent. Les courbes expérimentales $d_2/d_{2max}$ sont produites (figure 1a).

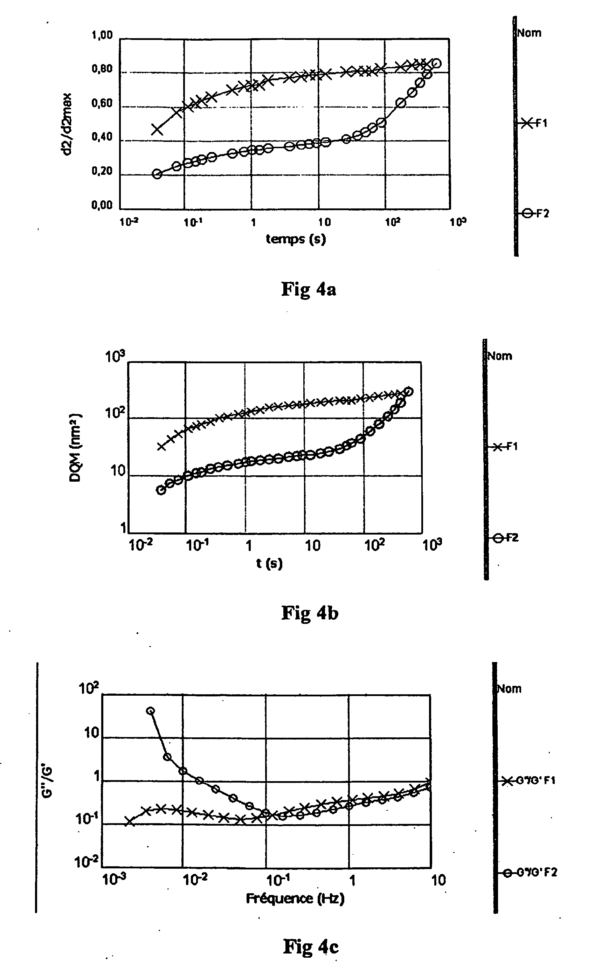

Ensuite les courbes DQM(t) sont produites pour chaque crème dessert grâce à l'expression E (voir figure 4b). Les courbes DQM nous renseignent sur le fait que les particules subissent un blocage durant leur diffusion, ce qui indique le caractère solide des deux produits pour certaines fréquences.

Enfin, pour chaque flacon, les spectres des modules visqueux et élastiques G"(f) et G'(f) avec f la fréquence mécanique, sont produits en l'aide de l'art antérieur enseignant la conversion de DQM en ces modules (voir figure 4c). Le rapport G"/G' est calculé. Il rend compte du caractère solide (G"/G'<1) ou liquide (G"/G'>1) du produit.

Nous constatons qu'au dessus de la fréquence de 0,1 Hz, les deux produits ont environ le même rapport G"/G' inférieur à un, et donc ils ont le même caractère solide/liquide pour les sollicitations mécaniques de fréquence supérieure à 0,1 Hz. Par contre, les produits diffèrent à basse fréquence : le produit F2 prend un caractère liquide. Cela révèle une différence de formulation qui entraîne des microstructures des produits différentes, alors que ceux-ci revendiquent les mêmes propriétés rhéologiques. Le caractère liquide à basse fréquence du produit F2 peut être considéré comme un indice de moins bonne stabilité par rapport au produit F1.

**Revendications**

1. Procédé de détermination des propriétés viscoélastiques d'un milieu complexe à partir du mouvement des particules en suspension, dans lequel un échantillon du milieu est placé dans un dispositif de mesure de la lumière diffusée par les particules en suspension apte à projeter une lumière cohérente sur ledit échantillon et à détecter et analyser la lumière diffusée pour calculer la distance inter-images $d_2$, **<u>caractérisé en ce qu'</u>**il comprend les étapes consistant essentiellement à :

> - a) caractériser l'opacité du milieu par la mesure de longueur de transport l* dudit milieu,
> - b) introduire dans un flacon de dimensions données un échantillon dudit milieu,
> - c) placer le flacon dans une chambre de mesure (1) thermostatée dudit dispositif de mesure,
> - d) projeter un faisceau de lumière cohérente sur l'échantillon et détecter la lumière diffusée par les particules sous forme d'une série d'images séquencées,
> - e) analyser le mouvement des particules en fonction du temps en calculant la distance inter-images $d_2$ et le rapport $d_2/d_{2max}$,
> - f) établir une expression analytique E mettant en relation directe, pour la valeur de l* déterminée à l'étape a), le rapport $d_2/d_{2max}$ et le déplacement quadratique moyenne DQM, en vue de calculer les modules visqueux et élastique du milieu.

2. Procédé selon la revendication 1, **<u>caractérisé en ce que</u>**, à l'étape f), l'expression E est exprimée à l'aide d'au moins un, et de préférence de trois coefficients variables susceptibles d'être exprimés en fonction de l'opacité du milieu, et ladite expression E est ajustée en fonction de la valeur de l* déterminée à l'étape a), avant le calcul des modules visqueux et élastique du milieu.

3. Procédé selon la revendication précédente, **<u>caractérisé en ce que</u>**, à l'étape f), les coefficients variables utilisés pour établir l'expression E sont des fonctions de l*, choisies et enregistrées dans une base de données préalablement constituée selon les étapes consistant à :

> i) préparer dans des flacons de dimensions données, une gamme d'échantillons d'un fluide simple de viscosité connue avec des opacités différentes,
> ii) pour chaque échantillon de la gamme,
>
> > - déterminer la valeur de l*,
> > - calculer la courbe théorique $DQM_T(t)$ en fonction du temps à l'aide de la loi de Stockes Einstein,
> > - analyser le mouvement des particules en fonction du temps pour calculer la distance inter-images $d_2$ et le rapport $d_2/d_{2max}$ et construire la courbe expérimentale $DQM_E(t)$ grâce à l'expression E,
> > - rechercher les valeurs desdits coefficients, pour obtenir une courbe théorique $DQM_T(t)$ coïncidant avec ladite la courbe expérimentale $DQM_E(t)$,
>
> iii) pour chaque coefficient, tracer la courbe de calibration représentant l'évolution de sa valeur en fonction de l*, et
> iv) enregistrer chacune desdites courbes dans une base de données apte à être sollicitée à l'étape f).

4. Procédé selon l'une des revendications précédentes, **<u>caractérisé en ce que</u>**, à l'étape f), l'expression analytique adopte la forme suivante :

$$(d_2/d_{2max})^2 = 1 - \exp\left\{ -4\,(A\,DQM\,k_0^2/6)^{[B\,+\,C\,\log10(A\,DQM\,k_o^2/6)]} \right\}$$

dans laquelle A, B, et C sont trois coefficients variables, et $k_o$ est le nombre d'onde de la lumière projetée.

5. Procédé selon la revendication précédente, **<u>caractérisé en ce que</u>** lesdits coefficients variables A, B et C sont choisis de sorte que les fonctions de calibration A(l*), B(l*) et C(l*) sont aptes à être représentées par des droites.

6. Procédé selon l'une quelconque des revendications précédentes, **<u>caractérisé en ce que</u>**, à l'étape d), la détection de ladite série d'images est réalisée selon une cadence croissante, en une ou en plusieurs salves.

**7.** Procédé selon la revendication précédente, **caractérisé en ce que** à l'étape d), la détection de ladite série d'images est réalisée en une seule salve à une cadence croissante selon une progression géométrique sur au moins deux décades.

**8.** Procédé selon l'une quelconque des revendications précédentes, **caractérisé en ce que**, à l'étape d), la lumière est projetée et détectée à l'aide d'un module optique (5) placé à extérieur à la chambre de mesure (1) celle-ci étant possédant une paroi percée de fenêtres (3).

**9.** Procédé selon l'une quelconque des revendications précédentes, **caractérisé en ce que**, à l'étape c), une pluralité de flacons d'échantillons sont placés dans plusieurs logements (4) contigus ménagés dans la chambre de mesure (1).

**10.** Procédé selon la revendication précédente, **caractérisé en ce que** le module optique (5) se place successivement face à chacun desdits flacons et les étapes d) à f) sont répétées pour calculer les modules visqueux et élastique de chacun des milieux échantillonnés.

**11.** Procédé selon l'une quelconque des revendications précédentes, **caractérisé en ce que** l'étape d) est réalisée dans des conditions de stabilité et d'uniformité thermique des échantillons et de la chambre de mesure (1), en l'absence de mouvements de convection de l'air entre le module optique (5) et l'échantillon, et de vibrations issues du milieu environnant.

**12.** Appareil de détermination des propriétés viscoélastiques d'un milieu complexe à partir du mouvement des particules en suspension, comprenant des moyens de projeter une lumière cohérente sur ledit milieu et des moyens de détecter et d'analyser la lumière diffusée pour calculer la distance inter-images $d_2$, **caractérisé en ce qu'**il comprend :

   - un module optique (5) comprenant d'une part une source de lumière cohérente (6) apte à projeter un faisceau vers un échantillon du milieu à analyser, et d'autre part des moyens de détection (7) de la lumière diffusée par ledit milieu, sous forme d'images matricielles successives, lesdits moyens étant associés à une unité d'analyse des images apte à fournir les valeurs de la distance inter-images de l'échantillon,
   - une chambre de mesure (1) thermostatée dotée d'au moins un logement (4) apte à recevoir un flacon de dimensions données contenant un échantillon dudit milieu, à une distance adéquate dudit module optique,
   - des moyens d'enregistrement et de traitement des données, comprenant des moyens d'acquisition des valeurs de I* caractérisant l'opacité des milieux à analyser, des moyens d'analyse et de calcul aptes à mettre en relation directe, pour une valeur de I*, le rapport $d_2/d_{2max}$ et le déplacement quadratique moyenne DQM, en vue de calculer les modules visqueux et élastique du milieu.

**13.** Appareil selon la revendication précédente, **caractérisé en ce que** ledit au moins un logement (4) recevant un flacon est ménagé dans un bloc chauffant (8) thermostaté, lui-même placé à l'intérieur de la chambre de mesure (1), à distance adéquate du module optique (5).

**14.** Appareil selon l'une des revendications 12 ou 13, **caractérisé en ce que** le module optique (5) est placé à l'extérieur à la chambre de mesure (1), celle-ci possédant une paroi isolante (2) percée de fenêtres (3) pour le passage de la lumière projetée et diffusée.

**15.** Appareil selon l'une des revendications 12 à 14, **caractérisé en ce que** la source de lumière cohérente (6) projetée sur l'échantillon est une source laser, et les moyens de détection (7) de la lumière diffusée comprennent un capteur matriciel de type caméra vidéo.

**16.** Appareil selon l'une des revendications 12 à 15, **caractérisé en ce qu'**il comprend des moyens de neutraliser les vibrations du milieu environnant, comprenant des pieds (9) en matériau amortissant et une structure support anti-vibratoire, choisie parmi : table en nid d'abeille, table à coussin d'air, paillasse alourdie.

**Claims**

**1.** Method for determination of the viscoelastic properties of a complex medium starting from the movement of particles in suspension, in which a sample of the medium is placed in a device for measuring the light that is scattered by the particles in suspension, able to project a coherent light on said sample, and to detect and analyze the scattered light for calculating the inter-image distance $d_2$, **characterized in that** it comprises the stages that essentially consist in:

- a) Characterizing the opacity of the medium by measuring the transport length I* of said medium,
- b) Introducing a sample of said medium into a flask of given dimensions,
- c) Placing the flask in a thermostatically-controlled measuring chamber (1) of said measuring device,
- d) Projecting a coherent light beam on the sample and detecting the light that is scattered by the particles in the form of a series of sequenced images,
- e) Analyzing the movement of the particles based on time by calculating the inter-image distance $d_2$ and the ratio $d_2/d_{2max}$,
- f) Establishing an analytical expression E putting into direct relationship, for the value of 1* that is determined in stage a), the ratio $d_2/d_{2max}$ and the mean square displacement MSD for the purpose of calculating the viscous and elastic moduli of the medium.

2. Method according to Claim 1, _wherein_ in stage f), the expression E is expressed using at least one, and preferably three, variable coefficients that can be expressed based on the opacity of the medium, and said expression E is adjusted based on the value of 1* that is determined in stage a), before the calculation of the viscous and elastic moduli of the medium.

3. Method according to the preceding claim, _wherein_ in stage f), the variable coefficients that are used for establishing the expression E are functions of 1*, selected and recorded in a database that was previously constituted according to the stages that consist in:

i) Preparing - in flasks of given dimensions - a range of samples of a simple fluid of known viscosity with different opacities,
ii) For each sample of the range,

- Determining the value of 1*,
- Calculating the theoretical curve $MSD_T(t)$ based on time using the Stokes-Einstein Law,
- Analyzing the movement of the particles based on time for calculating the inter-image distance $d_2$ and the ratio $d_2/d_{2max}$ and for plotting the experimental curve $MSD_E(t)$ using the expression E,
- Seeking the values of said coefficients for obtaining a theoretical curve $MSD_T(t)$ that coincides with said experimental curve $MSD_E(t)$,

iii) For each coefficient, tracing the calibration curve representing the evolution of its value based on 1*, and
iv) Recording each of said curves in a database that can be called up in stage f).

4. Method according to one of the preceding claims, _wherein_ in stage f), the analytical expression adopts the following form:

$$( d_2/d_{2max})^2 = 1 - \exp\left\{ -4 (A\, DQM\, k_o^2/6)^{[B + C\, \log_{10}(A\, DQM\, k_o^2/6)]} \right\}$$

in which A, B, and C are three variable coefficients, and $k_o$ is the wave number of the projected light.

5. Method according to the preceding claim, _wherein_ said variable coefficients A, B, and C are selected in such a way that the calibration functions A(1*), B(1*), and C(1*) are able to be represented by straight lines.

6. Method according to any of the preceding claims, _wherein_ in stage d), the detection of said series of images is carried out according to an increasing pace, in one or more bursts.

7. Method according to the preceding claim, _wherein_ in stage d), the detection of said series of images is carried out in a single burst at an increasing pace according to a geometric progression over at least two decades.

8. Method according to any of the preceding claims, _wherein_ in stage d), the light is projected and detected using an optical module (5) that is placed on the exterior of the measuring chamber (1), with the former having a wall penetrated by windows (3).

9. Method according to any of the preceding claims, <u>wherein</u> in stage c), a number of sample flasks are placed in several contiguous housings (4) located in the measuring chamber (1).

10. Method according to the preceding claim, <u>wherein</u> the optical module (5) is placed successively facing each of said flasks, and stages d) to f) are repeated for calculating the viscous and elastic moduli of each of the sampled media.

11. Method according to any of the preceding claims, <u>wherein</u> stage d) is carried out under conditions of stability and thermal uniformity of the samples and the measuring chamber (1) in the absence of air convection movements between the optical module (5) and the sample, and vibrations obtained from the surrounding environment.

12. Device for determining viscoelastic properties of a complex medium starting from the movement of particles in suspension, comprising means for projecting a coherent light on said medium and means for detecting and analyzing the scattered light for calculating the inter-image distance $d_2$, <u>wherein</u> it comprises:

   - An optical module (5) that comprises, on the one hand, a coherent light source (6) that is able to project a beam to a sample of the medium that is to be analyzed, and, on the other hand, means (7) for detection of the scattered light by said medium, in the form of successive matrix images, whereby said means are combined with a unit for image analysis that is able to provide values of the inter-image distance of the sample,
   - A thermostatically-controlled measuring chamber (1) that is equipped with at least one housing (4) that is able to accommodate a flask of given dimensions that contains a sample of said medium, at a suitable distance from said optical module,
   - Means for recording and processing data, comprising means for acquisition of values of 1* that characterize the opacity of the media to be analyzed, means for analysis and calculation that are able to put into direct relationship, for a value of 1*, the ratio $d_2/d_{2max}$ and the mean square displacement MSD, for the purpose of calculating the viscous and elastic moduli of the medium.

13. Device according to the preceding claim, <u>wherein</u> said at least one housing (4) that accommodates a flask is located in a thermostatically-controlled heating block (8), itself placed in the interior of the measuring chamber (1), at a suitable distance from the optical module (5).

14. Device according to one of Claims 12 or 13, <u>wherein</u> the optical module (5) is placed on the exterior of the measuring chamber (1), the latter having an insulating wall (2) that is penetrated by windows (3) for the passage of projected and scattered light.

15. Device according to one of Claims 12 to 14, <u>wherein</u> the coherent light source (6) that is projected on the sample is a laser source, and the means (7) for detection of the scattered light comprise a video-camera-type matrix sensor.

16. Device according to one of Claims 12 to 15, <u>wherein</u> it comprises means for neutralizing vibrations from the surrounding environment, comprising feet (9) made of damping material and a non-vibrating support structure, selected from among: a honeycomb table, an air cushion table, a weighted straw mattress.


**Patentansprüche**

1. Verfahren zur Bestimmung der viskoelastischen Eigenschaften eines komplexen Mediums anhand der Bewegung der Partikel in Suspension, wobei eine Probe des Mediums in eine Vorrichtung zur Messung des Lichts, das von den Partikeln in Suspension gestreut wird, gegeben wird, wobei diese dazu geeignet ist, ein kohärentes Licht auf die Probe einzustrahlen und das gestreute Licht zu analysieren, um den Abstand $d_2$ zwischen den Bildern zu berechnen, **dadurch gekennzeichnet, dass** es im Wesentlichen die folgenden Schritte umfasst:

   - a) Bestimmen der Opazität des Mediums, durch Messung der Transportlänge I* des Mediums,
   - b) Einfüllen einer Probe des Mediums in ein Behältnis mit gegebenen Abmessungen,
   - c) Anordnen des Behältnisses in einer thermostatisierten Messkammer (1) der Messvorrichtung,
   - d) Einstrahlen eines kohärenten Lichtstrahls auf die Probe und Detektieren des Lichts, das von den Partikeln gestreut wird, in Form einer Reihe von aufeinanderfolgenden Bildern.
   - e) Analysieren der Bewegung der Partikel in Abhängigkeit von der Zeit, indem der Abstand $d_2$ zwischen den Bildern und das Verhältnis $d_2/d_{2max}$ bestimmt wird,
   - f) Erstellen eines analytischen Ausdrucks E, der für den Wert von I*, welcher in Schritt a) bestimmt wurde,

das Verhältnis $d_2/d_2max$ und die mittlere quadratische Verschiebung DQM in eine direkte Beziehung setzt, um die viskosen und elastischen Module des Mediums zu bestimmen.

2.  Verfahren nach Anspruch 1, **dadurch gekennzeichnet, dass**, in Schritt f), der Ausdruck E mit Hilfe von mindestens einem, und vorzugsweise von drei variablen Koeffizienten ausgedrückt wird, welche in Abhängigkeit von der Opazität des Mediums ausgedrückt werden können, und der Ausdruck E in Abhängigkeit vom I*-Wert, welcher in Schritt a) bestimmt wurde, vor der Berechnung der viskosen und elastischen Module des Mediums angepasst wird.

3.  Verfahren nach dem vorhergehenden Anspruch, **dadurch gekennzeichnet, dass**, in Schritt f), die variablen Koeffizienten, die verwendet werden, um den Ausdruck E zu erstellen, Funktionen von I* darstellen, welche ausgewählt und in einer Datenbank gespeichert werden, die im Vorfeld gemäß den folgenden Schritten erstellt wurde:

    i) Bereiten einer Reihe von Proben eines einfachen Fluids von bekannter Viskosität mit verschiedenartigen Opazitäten, in Behältnissen mit gegebenen Abmessungen,
    ii) für jede Probe der Reihe,

    - Bestimmen des I*-Wertes,
    - Berechnen der theoretischen Kurve $DQM_T(t)$ in Abhängigkeit von der Zeit mit Hilfe der Stokes-Einstein-Gleichung,
    - Analysieren der Bewegung der Partikel in Abhängigkeit von der Zeit, um den Abstand $d_2$ zwischen den Bildern und das Verhältnis $d_2/d_2max$ zu berechnen und mittels des Ausdrucks E die experimentelle Kurve $DQM_E(t)$ zu erstellen,
    - Heraussuchen der Werte für die Koeffizienten, mit denen eine theoretische Kurve $DQM_E(t)$ erhalten wird, welche mit der experimentellen Kurve $DQM_E(t)$ übereinstimmt,

    iii) für jeden Koeffizienten, Aufzeichnen der Kalibrierkurve, welche die Entwicklung von dessen Wert Abhängigkeit von I* wiedergibt, und
    iv) Speichern der Kurven in einer Datenbank, die dafür geeignet ist, in Schritt f) abgefragt zu werden.

4.  Verfahren nach einem der vorhergehenden Ansprüche, **dadurch gekennzeichnet, dass**, in Schritt f), der analytische Ausdruck die folgende Form annimmt:

$$( d_2/ d_{2max})^2 = 1 - \exp \left\{ -4 (A\ DQM\ k_0^2/6)^{[B + C \log10(A\ DQM\ k_0^2/6)]} \right\}$$

wobei A, B und C drei variable Koeffizienten sind und $k_0$ die Wellenzahl des eingestrahlten Lichts ist.

5.  Verfahren nach dem vorhergehenden Anspruch, **dadurch gekennzeichnet, dass** die variablen Koeffizienten A, B und C derart ausgewählt werden, dass die Kalibrierfunktionen A(I*), B(I*) und C(I*) durch Geraden dargestellt werden können.

6.  Verfahren nach einem beliebigen der vorhergehenden Ansprüche, **dadurch gekennzeichnet, dass**, in Schritt d), die Detektion der Bilderreihe in zunehmendem zeitlichen Abstand erfolgt, in einer oder mehreren Salven.

7.  Verfahren nach dem vorhergehenden Anspruch, **dadurch gekennzeichnet, dass**, in Schritt d), die Detektion der Bilderreihe in einer einzigen Salve mit zunehmendem zeitlichen Abstand erfolgt, wobei das Voranschreiten geometrisch über mindestens zwei Zehnerpotenzen erfolgt.

8.  Verfahren nach einem beliebigen der vorhergehenden Ansprüche, **dadurch gekennzeichnet, dass**, in Schritt d), das Licht mit Hilfe eines optischen Moduls (5) eingestrahlt und detektiert wird, welches außerhalb der Messkammer (1) angeordnet ist, wobei diese eine Wand besitzt, die von Fenstern (3) durchbrochen ist.

9.  Verfahren nach einem beliebigen der vorhergehenden Ansprüche, **dadurch gekennzeichnet, dass**, in Schritt c), mehrere Probenbehältnisse in mehrere Aufnahmeräume (4) gestellt werden, welche aneinandergrenzend in der Messkammer (1) ausgespart sind.

**10.** Verfahren nach dem vorhergehenden Anspruch, **dadurch gekennzeichnet, dass** das optische Modul (5) sich nacheinander gegenüber jedem der Behältnisse positioniert und die Schritte d) bis f) wiederholt werden, um die viskosen und elastischen Module jedes der beprobten Medien zu berechnen.

**11.** Verfahren nach einem beliebigen der vorhergehenden Ansprüche, **dadurch gekennzeichnet, dass** der Schritt d) unter Bedingungen der thermischen Stabilität und Gleichförmigkeit der Proben und der Messkammer (1) durchgeführt wird, wobei die Luft zwischen dem optischen Modul (5) und der Probe keine Konvektionsbewegungen erfährt und keine Vibrationen auftreten, die aus dem Umgebungsbereich stammen.

**12.** Gerät zur Bestimmung der viskoelastischen Eigenschaften eines komplexen Mediums ausgehend von der Bewegung der Partikel in Suspension, wobei es Mittel zum Einstrahlen eines kohärenten Lichts auf das Medium und Mittel zum Detektieren und Analysieren des gestreuten Lichts umfasst, um den Abstand zwischen den Bildern $d_2$ zu berechnen, **dadurch gekennzeichnet, dass** es Folgendes umfasst :

- ein optisches Modul (5), das einerseits eine Quelle kohärenten Lichts (6) umfasst, die dafür geeignet ist, einen Strahl in Richtung der Probe des zu untersuchenden Mediums auszustrahlen, und andererseits Mittel zur Detektion (7) des Lichts, welches von dem Milieu gestreut wird, in Form von aufeinanderfolgenden Matrixbildern, wobei die Mittel mit einer Einheit zur Analyse der Bilder verbunden sind, welche dafür geeignet ist, für die Probe die Werte des Abstands zwischen den Bildern zu liefern,
- eine thermostatisierte Messkammer (1), die mit mindestens einem Aufnahmeraum (4) versehen ist, der ein Behältnis mit gegebenen Abmessungen aufnehmen kann, welches eine Probe des Mediums enthält, in einem geeigneten Abstand vom optischen Modul,
- Mittel zum Speichern und Verarbeiten der Daten, umfassend Mittel zum Aufzeichnen der I*-Werte, welche die Opazität der zu analysierenden Medien kennzeichnen, Mittel zur Analyse und Berechnung, welche dazu befähigt sind, für einen L*-Wert das Verhältnis $d_2/d_{2max}$ und die mittlere quadratische Verschiebung DQM in eine direkte Beziehung zu setzen, um die viskosen und elastischen Module des Mediums zu berechnen.

**13.** Gerät nach dem vorhergehenden Anspruch, **dadurch gekennzeichnet, dass** der mindestens eine Aufnahmeraum (4), der ein Behältnis aufnimmt, in einem thermostatisierten Heizblock (8) ausgespart ist, welcher seinerseits im Inneren der Messkammer (1) angeordnet ist, in geeignetem Abstand vom optischen Modul (5).

**14.** Gerät nach einem der Ansprüche 12 oder 13, **dadurch gekennzeichnet, dass** das optische Modul (5) außerhalb der Messkammer (1) angeordnet ist, wobei diese eine isolierende Wand (2) besitzt, die von Fenstern (3) durchbrochen ist, damit das eingestrahlte und gestreute Licht hindurch gelangen kann.

**15.** Gerät nach einem der Ansprüche 12 bis 14, **dadurch gekennzeichnet, dass** es sich bei der Quelle des kohärenten Lichts (6), welches auf die Probe eingestrahlt wird, um eine Laserquelle handelt, und die Mittel zur Detektion (7) des gestreuten Lichts einen Matrixsensor vom Typ Videokamera umfassen.

**16.** Gerät nach einem der Ansprüche 12 bis 15, **dadurch gekennzeichnet, dass** es Mittel zum Neutralisieren von Vibrationen des Umgebungsbereichs umfasst, die Füße (9) aus einem dämpfenden Werkstoff und eine vibrationshemmende Trägerstruktur umfassen, ausgewählt aus: einem Tisch mit Wabenstruktur, einem Tisch mit Luftkissen, einem beschwerten Labortisch.

fig. 1

Fig. 2

ABC non ajustés | A ajusté | A et B ajustés | A B et C ajustés

**Figure 3**

**Fig 4a**

**Fig 4b**

**Fig 4c**

**Figure 5**

**Figure 6**

**Figure 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1720000 A
- WO 2005031324 A

- FR 2841983